# FASCICULE DE BREVET EUROPEEN

(11) **EP 2 235 427 B1**
(45) Date de publication et mention de la délivrance du brevet: **17.08.2011**
(21) Numéro de dépôt: 09706779.7
(22) Date de dépôt: 28.01.2009
(51) Int. Cl.: F17C 13/04, F16K 1/30

(54) **DISPOSITIF DE REMPLISSAGE ET DE DISTRIBUTION DE GAZ ET ENSEMBLE COMPRENANT UN TEL DISPOSITIF**
VORRICHTUNG ZUR ABFÜLLUNG UND VERTEILUNG VON GAS SOWIE ANORDNUNG MIT EINER SOLCHEN VORRICHTUNG
DEVICE FOR FILLING AND DISTRIBUTING GAS AND ASSEMBLY COMPRISING SUCH A DEVICE

(30) Priorité: 30.01.2008 FR 0850554
(43) Date de publication de la demande: 06.10.2010
(73) Titulaire: L'Air Liquide Société Anonyme pour l'Etude et l'Exploitation des Procédés Georges Claude, 75007 Paris (FR)
(72) Inventeur: MORETTI, Alessandro, I-25217 Brescia (IT); PISOT, Philippe, F-95290 L'Isle Adam (FR); DENIS, Arnaud, F-78440 Lainville en Vexin (FR); LEMESLE, Gervais, F-95300 Pontoise (FR)
(74) Mandataire: De Cuenca, Emmanuel Jaime
(86) Numéro de dépôt international: PCT/FR2009/050123
(87) Numéro de publication internationale: WO 2009/095613

(56) Documents cités:
- EP-A- 1 400 742
- WO-A-2007/048954

## Description

La présente invention concerne un dispositif de remplissage et de distribution de gaz, un ensemble comprenant un réservoir et tel dispositif, ainsi qu'un procédé de contrôle des fuites.

L'invention concerne plus particulièrement un dispositif de remplissage et de distribution de gaz comprenant un corps destiné à être disposé dans l'orifice d'un réservoir de stockage de gaz sous pression, un circuit de soutirage s'étendant entre une première extrémité amont destinée à être reliée à l'intérieur du réservoir et une seconde extrémité aval destinée à être reliée à un utilisateur du gaz, le circuit de soutirage comprenant un détendeur de pression, une chambre basse pression et un clapet d'isolation disposés en série dans cet ordre d'amont en aval, la chambre basse pression étant reliée à un passage d'évacuation du gaz à l'extérieur du dispositif via une soupape de sécurité sensible à la pression dans la chambre basse pression.

Pour des raisons de sécurité notamment, des systèmes de remplissage et de distribution de gaz tels que des robinets à détendeurs intégrés sont prévus pour que l'utilisateur final d'une bouteille de gaz sous pression ne puisse pas être en contact avec le gaz à haute pression de la bouteille, mais au contraire uniquement avec du gaz à une pression réduite par un détendeur de pression.

Dans le cas où une valve est disposée en aval du détendeur (côté basse pression), une montée en pression peut se produire entre le détendeur et la valve d'isolement, notamment en cas de fuite du détendeur. En particulier, aucun détendeur ne peut être considéré étanche à 100% ceci d'autant plus pour des gaz dont les molécules sont petites (type hydrogène ou hélium).

Ainsi, en cas de stockage pendant une longue période sans soutirage, la chambre basse pression en aval du détendeur peut se remplir avec du gaz à une pression élevée. Dans ce cas, cela créé une situation dangereuse lorsque l'utilisateur veut soutirer à nouveau du gaz et se connecte au réservoir en ouvrant le clapet d'isolement.

Pour résoudre ce problème, il est connu d'utiliser des clapets - d'échappement de sécurité qui libèrent le gaz en cas de surpression ou de température excessive. Cependant, même si les fuites sont relativement faibles, dans certaines situations ces clapets d'échappement- connus peuvent également créer des situations dangereuses en libérant subitement une quantité importante de gaz. Ceci est particulièrement dangereux lorsque le gaz est inflammable comme l'hydrogène.

Un but de la présente invention est de pallier tout ou partie des inconvénients de l'art antérieur relevés ci-dessus.

A cette fin, le dispositif selon l'invention, par ailleurs conforme à la définition qu'en donne le préambule ci-dessus, est essentiellement caractérisé en ce que la soupape est conformée pour fermer le passage d'évacuation lorsque la pression dans la chambre basse pression est inférieure à un premier seuil, ouvrir le passage d'évacuation lorsque la pression dans la chambre est supérieure au premier seuil de pression et inférieure à un second seuil de pression et fermer le passage d'évacuation lorsque la pression dans la chambre est supérieure au second seuil de pression, la soupape de sécurité étant conformée pour fermer le passage d'évacuation lorsque la pression dans la chambre basse pression est inférieure à un premier seuil, ouvrir le passage d'évacuation lorsque la pression dans la chambre est supérieure au premier seuil de pression et inférieure à un second seuil de pression et fermer le passage d'évacuation lorsque la pression dans la chambre est supérieure au second seuil de pression.

Par ailleurs, des modes de réalisation de l'invention peuvent comporter l'une ou plusieurs des caractéristiques suivantes :
- la soupape de sécurité comporte un obturateur mobile soumis à la pression dans la chambre basse pression et sollicité par un organe de rappel vers une première position de fermeture du passage, lesdits moyens de rappel et l'obturateur étant dimensionnés pour autoriser le déplacement de l'obturateur entre la première position de fermeture du passage d'évacuation lorsque la pression dans la chambre basse pression est inférieure au premier seuil de pression, une deuxième position d'ouverture du passage d'évacuation lorsque la pression dans la chambre est supérieure au premier seuil de pression et inférieure au second seuil de pression et une troisième position de fermeture du passage d'évacuation lorsque la pression dans la chambre est supérieure au second seuil de pression,
- l'obturateur mobile comprend un piston couplé à un clapet de détente du détendeur de pression et au moins un joint apte à coopérer en fermeture/ouverture avec le passage d'évacuation,
- l'organe de rappel de l'obturateur comprend un ressort dont l'effort est transmis au clapet du détendeur de pression,
- l'organe de rappel de l'obturateur est situé dans un volume soumis à la pression extérieure au dispositif, ledit volume étant de préférence relié à l'extérieur via le passage d'évacuation du gaz, en aval de l'obturateur,
- le passage d'évacuation comprend une rainure formée entre l'obturateur et le corps du dispositif, la rainure étant reliée fluidiquement d'une part au passage d'évacuation et, d'autre part, à la chambre basse pression, l'obturateur comportant un ensemble de joints assurant les ouvertures ou fermetures du passage d'évacuation entre le piston et le corps du dispositif selon la position de l'obturateur par rapport au corps et à la rainure,
- l'obturateur comprend un conduit le traversant pour mettre en relation fluidique la chambre basse pression avec la rainure,
- l'obturateur est mobile en translation,
- la chambre basse pression est reliée au passage d'évacuation via un élément de restriction du débit de gaz à une valeur déterminée,
- le dispositif comprend un circuit de remplissage distinct du circuit de soutirage, le circuit de remplissage ayant une première extrémité reliée directement au réservoir ou via le circuit de soutirage, en amont du détendeur de pression, et une seconde extrémité distincte du circuit de soutirage,
- le premier seuil de pression est compris entre 20 et 29 bar et de préférence entre 23 et 25 bar,
- le second seuil de pression est compris entre 30 et 50 bar et de préférence entre 30 et 35 bar,
- la valeur déterminée du débit de gaz régulé par l'élément de restriction est compris entre 10 et 800 cm³/min et de préférence entre 10 et 50 cm³/min,
- le conduit de l'obturateur met en relation fluidique la chambre basse pression avec la rainure via élément de restriction.

Un autre but est de proposer un ensemble comprenant un réservoir de gaz sous pression et un dispositif de remplissage et de distribution conforme à l'une quelconque des caractéristiques précédentes ou ci-après.

Un autre but est de proposer un procédé de contrôle des fuites naturelles de gaz d'un réservoir de gaz sous pression comportant un dispositif de remplissage et de distribution conforme à l'une quelconque des caractéristiques ci-dessus ou ci-dessous dans lequel sont réalisées des étapes de purges successives et automatiques, via la soupape de sécurité, du gaz qui s'accumule dans la chambre basse pression du fait des fuites naturelles pour éviter une accumulation de pression excessive et, lors d'une défaillance du détendeur de pression et accumulation brutale de pression dans la chambre basse pression, une étape de fermeture automatique de la soupape de sécurité.

L'invention peut concerner également tout dispositif ou procédé alternatif comprenant toute combinaison des caractéristiques ci-dessus ou ci-dessous.

D'autres particularités et avantages apparaîtront à la lecture de la description ci-après, faite en référence aux figures dans lesquelles :
- la figure 1 représente une vue schématique et partielle illustrant un réservoir de gaz sous pression pourvu d'un exemple de dispositif de remplissage et de distribution de gaz selon l'invention,
- la figure 2 représente une vue en coupe, partielle et schématique d'un détail d'un exemple de dispositif de remplissage et de distribution de gaz selon l'invention dans une séquence de fonctionnement dite « au repos »,
- la figure 3 représente une vue agrandie du détail A de la figure 2,
- la figure 4 représente une vue agrandie du détail A de la figure 2, dans une séquence de fonctionnement dite « de purge de gaz de fuite vers l'extérieur »,
- la figure 5 représente une vue partielle du dispositif de la figure 2 incluant le détail A dans une séquence de fonctionnement dite de « fermeture en cas de fuite massive ».

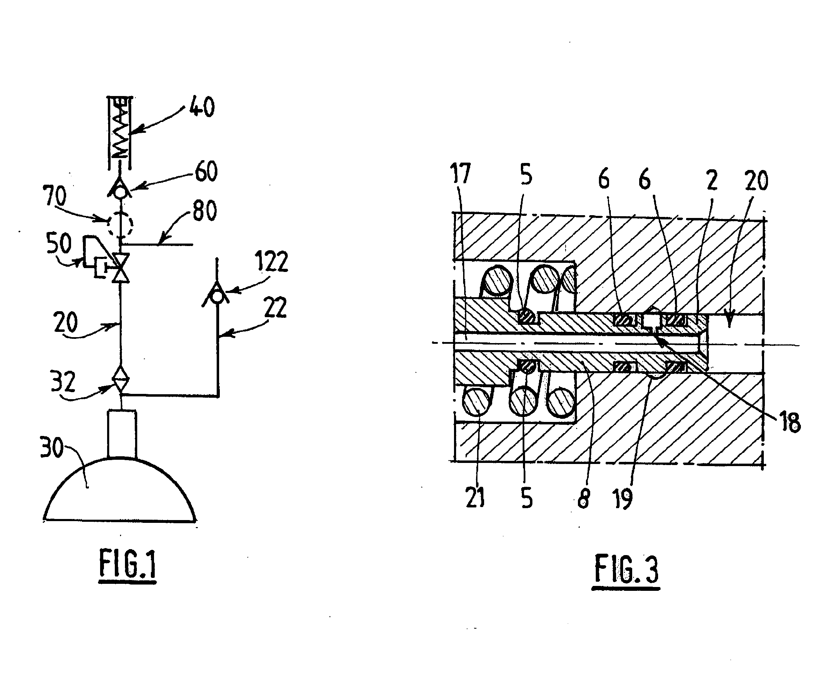

L'invention va à présent être décrite en référence aux figures 1 à 5 qui illustrent un exemple d'application nullement limitatif. En particulier, l'invention peut s'appliquer également à tout autre type de dispositif ou robinet. L'invention peut notamment s'appliquer aux dispositifs décrits notamment dans les documents WO2007/048954 A1 ou WO2007/048957.

Dans l'exemple de la figure 1, le dispositif ou robinet est monté dans l'orifice d'une bouteille 30 de gaz sous pression. Ce dispositif comprend donc un corps 1 (en une ou plusieurs parties) qui abrite un circuit 20 de soutirage de gaz s'étendant entre une première extrémité amont reliée à l'intérieur du réservoir 30 et une seconde extrémité aval destinée à être reliée à un utilisateur 40 du gaz.

Le circuit 2 de soutirage comprend, d'amont en aval (de la première extrémité vers la seconde extrémité) : un filtre 32 (optionnel), un détendeur 50 de pression, une chambre 70 basse pression et un clapet 60 d'isolation. En aval du clapet 60 d'isolation le dispositif peut comprendre un système de connexion rapide destiné à coopérer, par exemple avec une prise d'un système 40 de soutirage et d'ouverture du clapet 60 d'isolation.

Entre la chambre 70 basse pression et un clapet 60 d'isolation une voie 80 de sortie de gaz de sécurité est prévue. Par ailleurs, un circuit 22 de remplissage muni d'un clapet 122 de fermeture est prévu. De préférence, au moins une partie du circuit 22 de remplissage (par exemple l'entrée) est indépendante du circuit 20 de soutirage.

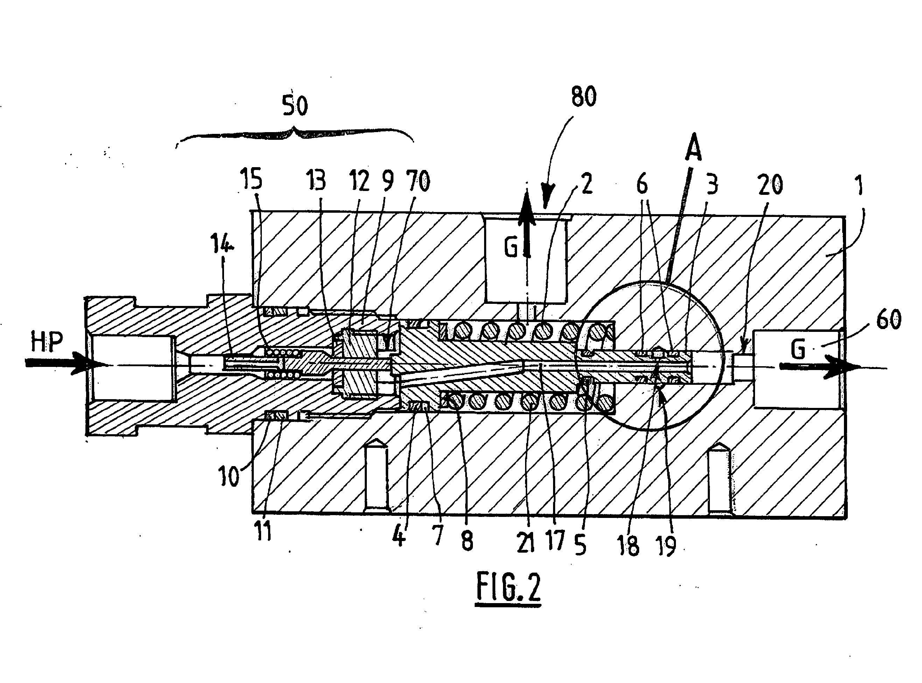

La figure 2 illustre un exemple d'agencement du régulateur de pression 50 soumis à la haute pression HP. Comme représenté, le régulateur de pression 50 peut être logé dans une cartouche 9 rapportée (par exemple vissée) de façon étanche sur le corps 1 (joint 11, bague anti-extrusion 10). Le régulateur de pression 50 peut comprendre un clapet 14 soumis à l'effort d'un ressort 15 vers l'aval en direction d'un siège 13, 12. L'extrémité aval du clapet 14 est quant à elle sollicitée vers l'amont par un piston 8 antagoniste coulissant de façon étanche (joint 4, bague anti-extrusion 7) dans le corps 1 et sollicité par un ressort 21 de piston.

Les tarages des ressorts 15 et 21 des clapets 14 et pistons 8 assurent l'ouverture du détendeur à une pression de détente déterminée supérieure à la pression atmosphérique.

Le ressort 21 qui sollicite le piston 8 est relié à la pression extérieure atmosphérique via un passage 80 pour éviter une contre-pression sur le clapet du détendeur 50. La chambre basse pression 70 est formée entre l'extrémité aval du siège de clapet 12 et l'extrémité amont du piston 8.

Le piston 8 est traversé par un conduit 17 qui met en relation fluidique la chambre 70 basse pression avec une rainure 19 formée dans le corps 1 autour de l'extrémité aval du piston.

Plus précisément, un élément de restriction de débit 18 formé dans le corps du piston 8 régule le débit de gaz acheminé au niveau d'une chambre située au niveau de la rainure 19.

En situation normale, le gaz détendu provenant de la chambre basse pression 70 est stoppé à cet endroit via une paire de joints 6 toriques portés par le piston 8 et situés de part et d'autre de la rainure 19 (étanchéité avec le corps 1, figures 2 et 3).

En aval du piston 8, le corps 1 comprend le clapet 60 d'isolation (non représenté en détail). En situation normale d'utilisation lors d'un soutirage, le gaz G détendu sort via cette voie (flèche située à droite de la figure 2).

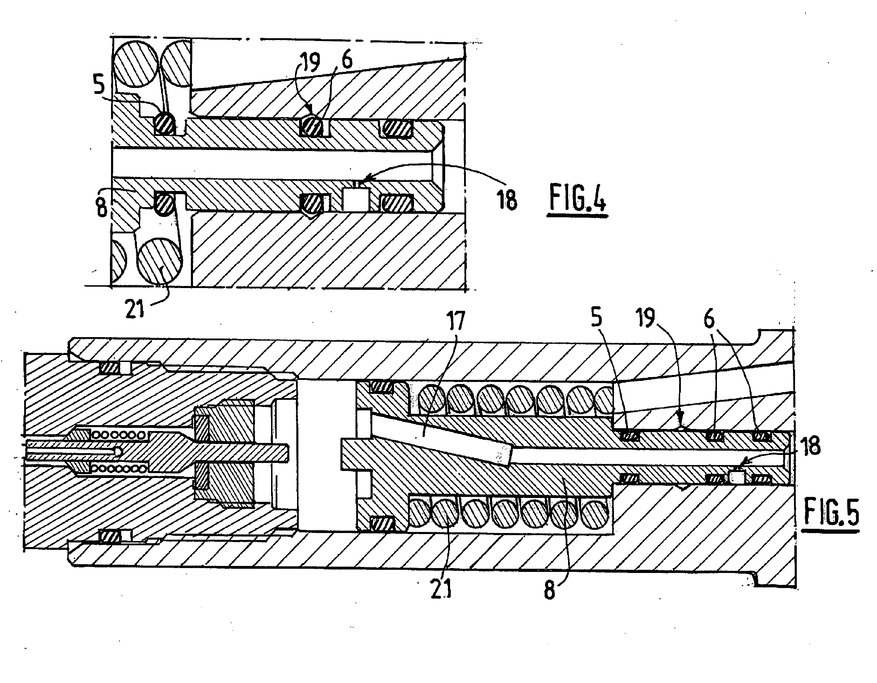

En cas de faible fuite du détendeur 50, la pression dans la chambre 70 va progressivement croître au dessus de la pression de détente du détendeur 50. Ceci va augmenter l'effort sur la face amont du piston 8. Cette pression croissante déplace le piston 8 vers l'aval (compression du ressort 21 de piston). Lorsque la pression dans la chambre 70 atteint un premier seuil déterminé, le joint 6 amont de la paire de joints atteint la rainure 19 et vient s'y loger (figure 4). Dans cette position, l'étanchéité entre le corps 1 et le piston 8 n'est plus assurée en amont de la rainure 19. Le gaz provenant de la chambre 70 basse pression via l'élément 18 de restriction peut circuler et s'échapper vers l'extérieur via la chambre du ressort 21 de piston et le passage 80 d'évacuation (soupape ouverte flèche vers le haut sur la figure 2).

Lorsque cette quantité déterminée de gaz de fuite a été libérée, la pression dans la chambre 70 basse pression revient à sa valeur normale et le piston 8 est repoussé par son ressort 21 vers l'amont, dans la position des figures 2 et 3 dans laquelle le gaz de la chambre basse pression 70 ne peut rejoindre le passage d'évacuation 80 (soupape fermée).

Ce processus de montée en pression progressive suivi d'une purge va se répéter automatiquement tant qu'une fuite mesurée se produit. De cette façon, de faibles quantités de gaz sont libérées à chaque purge. Ainsi une faible fuite de gaz ne provoque pas une accumulation de pression démesurée dans le dispositif.

En revanche en cas d'augmentation de pression plus importante dans la chambre basse pression, au-delà d'un second seuil de pression déterminée (par exemple en cas de défaillance du détendeur 50), le piston 8 est repoussé par le gaz vers l'aval au-delà de la position de purge de la figure 4, pour arriver dans une position de fermeture illustrée à la figure 5. En effet, le débit de gaz arrivant dans la chambre 70 basse pression excède le débit qui peut être évacué via l'élément 18 de restriction.

Dans cette position de fermeture, le couple de joints 6 a dépassé le rainure 19 mais un joint 5 amont porté par le piston 8 vient s'engager contre le corps 1 et fermer le passage de gaz entre la sortie 80 et la rainure 19. De plus, dans cette position, le couple de joints 6 encadre à nouveau de façon étanche l'élément de restriction 18 du piston 8. Dans cette position de fermeture la soupape de sécurité se ferme pour empêcher une évacuation de gaz trop importante via le passage d'évacuation 80. Le gaz sous haute pression qui a passé le détendeur 50 de pression défaillant est maintenu dans le corps par le clapet 6 d'isolement et sera géré par la prise de soutirage qui pourra être prévue pour à cet effet.

De même, un système (afficheur) pourra signaler que la pression en sortie de clapet 60 d'isolement est supérieure à la valeur attendue.

## Revendications

1. Dispositif de remplissage et de distribution de gaz comprenant un corps destiné à être disposé dans l'orifice d'un réservoir de stockage de gaz sous pression, un circuit (20) de soutirage de gaz s'étendant entre une première extrémité amont destinée à être reliée à l'intérieur du réservoir (30) et une seconde extrémité aval destinée à être reliée à un utilisateur (40) du gaz, le circuit (20) de soutirage comprenant un détendeur (50) de pression, une chambre (70) basse pression et un clapet (60) d'isolation disposés en série dans cet ordre d'amont en aval, **caractérisé en ce que** la chambre (70) basse pression est reliée à un passage (80) d'évacuation du gaz à l'extérieur du dispositif via une soupape de sécurité (5, 6, 8, 18, 19, 21) sensible à la pression dans la chambre (70) basse pression et conformée pour fermer le passage (80) d'évacuation lorsque la pression dans la chambre (70) basse pression est inférieure à un premier seuil, ouvrir le passage (80) d'évacuation lorsque la pression dans la chambre (70) est supérieure au premier seuil de pression et inférieure à un second seuil de pression et fermer le passage (80) d'évacuation lorsque la pression dans la chambre (70) est supérieure au second seuil de pression.

2. Dispositif selon la revendication 1, **caractérisé en ce que** la soupape de sécurité (5, 6, 8, 18, 19, 21) comporte un obturateur (5, 6, 8) mobile soumis à la pression dans la chambre (70) basse pression et sollicité par un organe de rappel (21) vers une première position de fermeture du passage (80), lesdits moyens de rappel et l'obturateur (5, 6, 8) étant dimensionnés pour autoriser le déplacement de l'obturateur (5, 6, 8) entre la première position de fermeture du passage (80) d'évacuation lorsque la pression dans la chambre (70) basse pression est inférieure au premier seuil de pression, une deuxième position d'ouverture du passage (80) d'évacuation lorsque la pression dans la chambre (70) est supérieure au premier seuil de pression et inférieure au second seuil de pression et une troisième position de fermeture du passage (80) d'évacuation lorsque la pression dans la chambre (70) est supérieure au second seuil de pression.

3. Dispositif selon la revendication 2, **caractérisé en ce que** l'obturateur (5, 6, 8) mobile comprend un piston (8) couplé à un clapet (14) de détente du détendeur (50) de pression et au moins un joint (5, 6) apte à coopérer en fermeture/ouverture avec le passage (80) d'évacuation.

4. Dispositif selon la revendication 3, **caractérisé en ce que** l'organe de rappel (21) de l'obturateur (5, 6, 8) comprend un ressort dont l'effort est transmis au clapet (14) du détendeur (50) de pression.

5. Dispositif selon l'une quelconque des revendications 2 à 4, **caractérisé en ce que** l'organe de rappel (21) de l'obturateur (5, 6, 8) est situé dans un volume soumis à la pression extérieure au dispositif, ledit volume' étant de préférence relié à l'extérieur via le passage (80) d'évacuation du gaz, en aval de l'obturateur (5, 6, 8).

6. Dispositif selon l'une quelconque des revendications 1 à 5, **caractérisé en ce que** le passage (80) d'évacuation comprend une rainure (19) formée entre l'obturateur (8) et le corps (1) du dispositif, la rainure (19) étant reliée fluidiquement d'une part au passage (80) d'évacuation et, d'autre part, à la chambre (70) basse pression, l'obturateur (8) comportant un ensemble de joints (5, 6) assurant les ouvertures ou fermetures du passage (80) d'évacuation entre le piston (8) et le corps (1) du dispositif selon la position de l'obturateur (5, 6, 8) par rapport au corps (1) et à la rainure (19).

7. Dispositif selon la revendication 6, **caractérisé en ce que** l'obturateur (8) comprend un conduit (17) le traversant pour mettre en relation fluidique la chambre (70) basse pression avec la rainure (19).

8. Dispositif selon l'une quelconque des revendications 1 à 7, **caractérisé en ce que** l'obturateur (8) est mobile en translation.

9. Dispositif selon l'une quelconque des revendications 1 à 8, **caractérisé en ce que** la chambre (70) basse pression est reliée au passage (80) d'évacuation via un élément de restriction (18) du débit de gaz à une valeur déterminée.

10. Dispositif selon l'une quelconque des revendications précédentes, **caractérisé en ce qu'**il comprend un circuit (22) de remplissage distinct du circuit (20) de soutirage, le circuit (22) de remplissage ayant une première extrémité reliée directement au réservoir (30) ou via le circuit (20) de soutirage, en amont du détendeur (50) de pression, et une seconde extrémité distincte du circuit (20) de soutirage.

11. Ensemble comprenant un réservoir de gaz sous pression et un dispositif de remplissage et de distribution conforme à l'une quelconque des revendications précédentes.

12. Procédé de contrôle des fuites de gaz d'un réservoir de gaz sous pression comportant un dispositif de remplissage et de distribution conforme à l'une quelconque des revendications 1 à 10, **caractérisé en ce qu'**il comporte des étapes de purges successives et automatiques, via la soupape de sécurité (5, 6, 8, 18, 19, 21), du gaz qui s'accumule dans la chambre (70) basse pression du fait des fuites naturelles, pour éviter une accumulation de pression excessive et, lors d'une défaillance du détendeur (50) de pression et accumulation brutale de pression dans la chambre (70) basse pression, une étape de fermeture automatique de la soupape de sécurité.

## Claims

1. Gas filling and dispensing device comprising a body intended to be placed in the orifice of a pressurized gas storage reservoir, a gas withdrawing circuit (20) running between an upstream first end intended to be connected to the inside of the reservoir (30) and a downstream second end intended to be connected to a user (40) of the gas, the withdrawing circuit (20) comprising a pressure regulator (50), a low-pressure chamber (70) and an isolating valve (60) all arranged in series in that order from the upstream to downstream end, **characterized in that** the low-pressure chamber (70) is connected to a passage (80) for discharging the gas to the outside of the device via a safety relief valve (5, 6, 8, 18, 19, 21) sensitive to the pressure in the low-pressure chamber (70) and designed to close the discharge passage (80) when the pressure in the low-pressure chamber (70) is below a first threshold, to open the discharge passage (80) when the pressure in the chamber (70) is above the first pressure threshold and below a second pressure threshold and to close the discharge passage (80) when the pressure in the chamber (70) is above the second pressure threshold.

2. Device according to Claim 1, **characterized in that** the safety relief valve (5, 6, 8, 18, 19, 21) comprises a moving shutter (5, 6, 8) subjected to the pressure in the low-pressure chamber (70) and urged by a return member (21) toward a first position of closing the passage (80), said return means and the shutter (5, 6, 8) being sized to allow the shutter (5, 6, 8) to move between the first position of closing the discharge passage (80) when the pressure in the low-pressure chamber (70) is below the first pressure threshold, a second position of opening the discharge passage (80) when the pressure in the chamber (70) is above the first pressure threshold and below the second pressure threshold and a third position of closing the discharge passage (80) when the pressure in the chamber (70) is above the second pressure threshold.

3. Device according to Claim 2, **characterized in that** the moving shutter (5, 6, 8) comprises a piston (8) coupled to a pressure relief valve (14) of the pressure regulator (50) and at least one seal (5, 6) able to collaborate for the purposes of closing/opening with the discharge passage (80).

4. Device according to Claim 3, **characterized in that** the return member (21) that returns the shutter (5, 6, 8) comprises a spring the spring load of which is transmitted to the valve (14) of the pressure regulator (50).

5. Device according to any one of Claims 2 to 4, **characterized in that** the return member (21) for returning the shutter (5, 6, 8) is situated in a volume subjected to the pressure outside the device, said volume preferably being connected to the outside via the gas discharge passage (80), downstream of the shutter (5, 6, 8).

6. Device according to any one of Claims 1 to 5, **characterized in that** the discharge passage (80) comprises a groove (19) formed between the shutter (8) and the body (1) of the device, the groove (19) communicating fluidly firstly with the discharge passage (80) and secondly with the low-pressure chamber (70), the shutter (8) comprising a set of seals (5, 6) for keeping the discharge passage (80) between the piston (8) and the body (1) of the device open or closed according to the position of the shutter (5, 6, 8) with respect to the body (1) and to the groove (19).

7. Device according to Claim 6, **characterized in that** the shutter (8) comprises a duct (17) passing through it to place the low-pressure chamber (70) in fluidic communication with the groove (19).

8. Device according to any one of Claims 1 to 7, **characterized in that** the shutter (8) is capable of translational movement.

9. Device according to any one of Claims 1 to 8, **characterized in that** the low-pressure chamber (70) is connected to the discharge passage (80) via a restricting element (18) that restricts the flow of gas to a determined value.

10. Device according to any one of the preceding claims, **characterized in that** it comprises a filling circuit (22) distinct from the withdrawing circuit (20), the filling circuit (22) having a first end connected to the reservoir (30) directly or via the withdrawing circuit (20), upstream of the pressure regulator (50), and a second end distinct from the withdrawing circuit (20).

11. Assembly comprising a pressurized gas reservoir and a filling and dispensing device according to any one of the preceding claims.

12. Method of controlling leakages of gas from a pressurized gas reservoir comprising a filling and dispensing device according to any one of Claims 1 to 10, **characterized in that** it comprises steps of successively and automatically, via the safety relief valve (5, 6, 8, 18, 19, 21), purging the gas which has built up in the low-pressure chamber (70) as a result of natural leakage, in order to avoid an excessive pressure buildup and, if the pressure regulator (50) fails and there is a sudden buildup of pressure in the low-pressure chamber (70), a step of automatically closing the safety relief valve.

## Patentansprüche

1. Vorrichtung zum Einfüllen und zur Ausgabe von Gas, die einen Körper aufweist, der dazu bestimmt ist, in der Öffnung eines Druckgas-Lagerbehälters angeordnet zu werden, wobei ein Gas-Entnahmekreis (20) sich zwischen einem ersten vorderen Ende, das dazu bestimmt ist, mit dem Inneren des Behälters (30) verbunden zu werden, und einem zweiten hinteren Ende erstreckt, das dazu bestimmt ist, mit einem Nutzer (40) des Gases verbunden zu werden, wobei der Entnahmekreis (20) einen Druckminderer (50), eine Niederdruckkammer (70) und ein Isolierventil (60) enthält, die in dieser Reihenfolge von vorne nach hinten angeordnet sind, **dadurch gekennzeichnet, dass** die Niederdruckkammer (70) mit einem Durchgang (80) zur Abfuhr des Gases nach außerhalb der Vorrichtung über ein Sicherheitsventil (5, 6, 8, 18, 19, 21) verbunden ist, das auf den Druck in der Niederdruckkammer (70) reagiert und gestaltet ist, um den Abfuhrdurchgang (80) zu schließen, wenn der Druck in der Niederdruckkammer (70) unter einer ersten Schwelle liegt, den Abfuhrdurchgang (80) zu öffnen, wenn der Druck in der Kammer (70) über der ersten Druckschwelle und unter einer zweiten Druckschwelle liegt, und den Abfuhrdurchgang (80) zu schließen, wenn der Druck in der Kammer (70) über der zweiten Druckschwelle liegt.

2. Vorrichtung nach Anspruch 1, **dadurch gekennzeichnet, dass** das Sicherheitsventil (5, 6, 8, 18, 19, 21) eine bewegliche Verschlussvorrichtung (5, 6, 8) aufweist, die dem Druck in der Niederdruckkammer (70) ausgesetzt ist und von einem Rückstellorgan (21) in eine erste Stellung des Schließens des Durchgangs (80) beaufschlagt wird, wobei die Rückstelleinrichtungen und die Verschlussvorrichtung (5, 6, 8) bemessen sind, um die Verschiebung der Verschlussvorrichtung (5, 6, 8) zwischen der ersten Stellung des Schließens des Abfuhrdurchgangs (80), wenn der Druck in der Niederdruckkammer (70) unter der ersten Druckschwelle liegt, einer zweiten Stellung des Öffnens des Abfuhrdurchgangs (80), wenn der Druck in der Kammer (70) über der ersten Druckschwelle und unter der zweiten Druckschwelle liegt, und einer dritten Stellung des Schließens des Abfuhrdurchgangs (80) zu erlauben, wenn der Druck in der Kammer (70) über der zweiten Druckschwelle liegt.

3. Vorrichtung nach Anspruch 2, **dadurch gekennzeichnet, dass** die bewegliche Verschlussvorrichtung (5, 6, 8) einen Kolben (8), der mit einem Druckminderventil (14) des Druckminderers (50) verbunden ist, und mindestens eine Dichtung (5, 6) enthält, die beim Schließen/Öffnen mit dem Abfuhrdurchgang (80) zusammenwirken kann.

4. Vorrichtung nach Anspruch 3, **dadurch gekennzeichnet, dass** das Rückstellorgan (21) der Verschlussvorrichtung (5, 6, 8) eine Feder enthält, deren Kraft an das Ventil (14) des Druckminderers (50) übertragen wird.

5. Vorrichtung nach einem der Ansprüche 2 bis 4, **dadurch gekennzeichnet, dass** das Rückstellorgan (21) der Verschlussvorrichtung (5, 6, 8) sich in einem Volumen befindet, das dem Druck außerhalb der Vorrichtung ausgesetzt ist, wobei das Volumen vorzugsweise über den Gas-Abfuhrdurchgang (80) hinter der Verschlussvorrichtung (5, 6, 8) mit der Außenumgebung verbunden ist.

6. Vorrichtung nach einem der Ansprüche 1 bis 5, **dadurch gekennzeichnet, dass** der Abfuhrdurchgang (80) eine Rille (19) enthält, die zwischen der Verschlussvorrichtung (8) und dem Körper (1) der Vorrichtung geformt ist, wobei die Rille (19) fluidisch einerseits mit dem Abfuhrdurchgang (80) und andererseits mit der Niederdruckkammer (70) verbunden ist, wobei die Verschlussvorrichtung (8) einen Satz von Dichtungen (5, 6) aufweist, die die Öffnungen und Schließungen des Abfuhrdurchgangs (80) zwischen dem Kolben (8) und dem Körper (1) der Vorrichtung entsprechend der Stellung der Verschlussvorrichtung (5, 6, 8) bezüglich des Körpers (1) und der Rille (19) gewährleisten.

7. Vorrichtung nach Anspruch 6, **dadurch gekennzeichnet, dass** die Verschlussvorrichtung (8) einen sie durchquerenden Kanal (17) enthält, um die Niederdruckkammer (70) mit der Rille (19) in fluidische Verbindung zu bringen.

8. Vorrichtung nach einem der Ansprüche 1 bis 7, **dadurch gekennzeichnet, dass** die Verschlussvorrichtung (8) translationsbeweglich ist.

9. Vorrichtung nach einem der Ansprüche 1 bis 8, **dadurch gekennzeichnet, dass** die Niederdruckkammer (70) mit dem Abfuhrdurchgang (80) über ein Element (18) zur Drosselung des Gasdurchsatzes auf einen bestimmten Wert verbunden ist.

10. Vorrichtung nach einem der vorhergehenden Ansprüche, **dadurch gekennzeichnet, dass** sie einen Einfüllkreis (22) enthält, der vom Entnahmekreis (20) getrennt ist, wobei der Einfüllkreis (22) ein erstes Ende, das direkt oder über den Entnahmekreis (20) vor dem Druckminderer (50) mit dem Behälter (30) verbunden ist, und ein zweites vom Entnahmekreis (20) getrenntes Ende hat.

11. Einheit, die einen Druckgasbehälter und eine Einfüll- und Ausgabevorrichtung nach einem der vorhergehenden Ansprüche enthält.

12. Verfahren zur Überwachung der Gaslecks eines Druckgasbehälters, der eine Einfüll- und Ausgabevorrichtung nach einem der Ansprüche 1 bis 10 aufweist, **dadurch gekennzeichnet, dass** es aufeinanderfolgende und automatische Schritte, über das Sicherheitsventil (5, 6, 8, 18, 19, 21), zum Ablassen des Gases, das sich in der Niederdruckkammer (70) aufgrund der natürlichen Lecks aufstaut, um einen übermäßigen Druckstau zu vermeiden, und bei einem Defekt des Druckminderers (50) und einem plötzlichen Druckstau in der Niederdruckkammer (70) einen Schritt des automatischen Schließens des Sicherheitsventils aufweist.
